# EUROPÄISCHE PATENTSCHRIFT

(11) **EP 3 098 907 B1**
(45) Veröffentlichungstag und Bekanntmachung des Hinweises auf die Patenterteilung: **21.03.2018**
(21) Anmeldenummer: 16165767.1
(22) Anmeldetag: 18.04.2016
(51) Int. Cl.: H01R 9/24, H01R 4/66, H02G 13/00, H01R 4/34

(54) **POTENTIALAUSGLEICHSSCHIENE**
EQUIPOTENTIAL BONDING RAIL
BARRE EQUIPOTENTIELLE

(30) Priorität: 27.05.2015 DE 202015102720 U
(43) Veröffentlichungstag der Anmeldung: 30.11.2016
(73) Patentinhaber: OBO Bettermann Produktion Deutschland GmbH & Co.KG, 58710 Menden (DE)
(72) Erfinder: Szalay, Zsolt Árpád, 1145 Budapest (HU); Sánta, Ádám, 2310 Szigetszentmiklós (HU); Bischoff, Martin, 58730 Fröndenberg (DE); Trinkwald, Jürgen, 58708 Menden (DE)
(74) Vertreter: Köchling, Conrad-Joachim

(56) Entgegenhaltungen:
- CN-U- 202 585 764
- DE-A1-102004 063 668
- DE-A1-102008 010 172
- DE-U1- 8 500 148
- US-A1- 2014 335 708

## Beschreibung

### Die Erfindung betrifft eine

Potentialausgleichsschiene in Form eines flachen Materialstreifens aus Metall, an dem eine Spannplatte aus Metall mittels die Teile durchgreifender Befestigungsmittel befestigbar oder befestigt ist, wobei zwischen dem Materialstreifen und der Spannplatte ein quer zum Längsverlauf des Materialstreifens anzuordnender flacher Fundamenterdleiter einspannbar oder eingespannt ist.

Eine derartige Potentialausgleichsschiene ist beispielsweise aus der DE 10 2004 063 668 A1 bekannt. Eine weitere ähnliche Gestaltung ist aus der CN 202 585 764 U bekannt.

Solche Potentialausgleichsschienen finden in der Elektroinstallation von Gebäuden, insbesondre im Bereich des inneren Blitzschutzes eines Gebäudes, vielfach Verwendung.

Bei dieser im Stand der Technik bekannten Lösung wird beispielsweise zuerst der flache Materialstreifen der Potentialausgleichsschiene mittels isolierter Befestigungsmittel isoliert an einer Gebäudewandung, die sich üblicherweise an einer sehr tiefen Stelle des Gebäudes, also beispielsweise im Kellergeschoss oder Untergeschoss des Gebäudes befindet, befestigt. Anschließend werden sowohl der Erdleiter als auch ins Erdreich abzuführende Masseanschlüsse mit dem flachen Materialstreifen der Potentialausgleichsschiene leitend verbunden. Dies erfolgt im Stand der Technik durch das Verklemmen der Masseleiter gegen den flachen Materialstreifen beispielsweise mittels Schraubklemmen.

Eine derartige Potentialausgleichsschiene hat sich in der Praxis bewährt und wird in großen Stückzahlen auf dem Markt eingesetzt.

Jedoch ist es bei einer derartigen Lösung nachteilig, dass diese nicht zur Verwendung in explosionsgefährdeten Umgebungen verwendet werden können, da insbesondere im Verbindungsbereich des flachen Materialstreifens mit dem Fundamenterdleiter nur Spannkräfte herrschen, die beim Abführen von Spannungsspitzen die Bildung von Zündfunken während des Ableitens des Stromes ermöglichen.

Aus der DE 10 2008 0010 172 A1 ist eine Verbindungsanordnung für Fundamenterde bekannt, wobei anstelle von flachen Materialstreifen ein etwa quaderförmiger Grundkörper vorgesehen ist, der Schlitze zur Aufnahme von bandstahlförmigen Leitern aufweist, die jeweils mit mehreren Klemmschrauben klemmend fixiert werden.

Aufgrund des eingangs genannten Standes der Technik liegt der vorliegenden Erfindung die Aufgabe zugrunde, eine Potentialausgleichsschiene der eingangs genannten Art derart zu verbessern, dass diese einen sicheren Einsatz in explosionsgefährdeten Bereichen ermöglicht, die dabei kostengünstig und einfach zu fertigen ist und eine hohe Lebensdauer aufweist.

Zur Lösung dieser Aufgabe schlägt die Erfindung vor, dass der Materialstreifen mindestens im von der Spannplatte überdeckten Bereich derart biegesteif ausgebildet ist, dass er den von den Befestigungsmitteln aufgebrachten Spannkräften ohne Durchbiegung widersteht und der Fundamenterdleiter in der eingespannten Lage über seine gesamte Breite plan an dem flachen Materialstreifen anliegt, wobei der flache Materialstreifen zumindest in dem Bereich der von der Spannplatte überdeckt ist, im Querschnitt eine Profilform aufweist, und wobei der flache Materialstreifen zumindest in dem Bereich der von der Spannplatte überdeckt ist, im Querschnitt U-förmig ausgebildet ist, wobei der Fundamenterdleiter außenseitig auf der Basis der U-Form anliegt und gegen diese verspannt ist.

Durch die Ausbildung eines derartigen biegesteifen Bereichs ist es ermöglicht, zumindest den Fundamenterdleiter mit einer sehr hohen Spannkraft gegen den verstärkten Bereich des Materialstreifens zu verspannen, sodass dieser über seine gesamte Breite plan an dem flachen Materialstreifen anliegt. Hierdurch ist die ungewollte und in explosionsgefährdeten Bereichen absolut zu vermeidende Funkenbildung zwischen Fundamenterdleiter und flachem Materialstreifen vermieden, da die Funkenbildung üblicherweise nur in Bereichen mit geringen Abständen zwischen den metallischen Teilen entsteht. Durch den biegesteifen Bereich des flachen Materialstreifens kann also eine herkömmliche Potentialausgleichsschiene derart verbessert werden, dass diese auch in explosionsgefährdeten Umgebungen bedenkenlos einsetzbar ist.

Die so geschaffene Potentialausgleichsschiene ist aufgrund ihrer großen Ähnlichkeit zu im Stand der Technik bekannten Lösungen aus dem Blitzschutzbereich für Gebäude dem Monteur bereits bekannt, sodass dieser auch die neue Potentialausgleichsschiene sofort und ohne Zuhilfenahme von Fachwerkzeug montieren kann.

Die Ausbildung einer Profilform stellt dabei ein Mittel zur Erhöhung der Biegesteifigkeit des Materialstreifens dar.

Durch die Ausbildung der U-Form in dem Bereich, der von der Spannplatte überdeckt ist, ist die Biegesteifigkeit des flachen Materialstreifens in diesem Bereich deutlich gegenüber der flachen, nicht profilierten Ausbildung erhöht, sodass das Verspannen des Fundamenterdleiters gegen den flachen Materialstreifen in diesem Bereich mit deutlich höheren Spannkräften erfolgen kann, sodass der Fundamenterdleiter bis in eine Lage, in der er absolut plan auf dem flachen Materialstreifen aufliegt, gegen diesen verspannt werden kann. Somit ist die Bildung von Zündfunken insbesondere verursacht durch geringe Abstände zwischen Fundamenterdleiter und Materialstreifen der Potentialausgleichsschiene verhindert und somit der Einsatz der Potentialausgleichsschiene in explosionsgefährdeten Umgebunden ermöglicht.

Eine weitere Lösung der Aufgabe, die für sich allein aber auch in Kombination mit dem Hauptanspruch vorteilhaft ist, wird darin gesehen, dass gegenüber der Spannplatte auf der dieser abgewandten Seite des Materialstreifens eine Konterplatte angeordnet ist, die ebenfalls von den Befestigungsmitteln durchgriffen ist, wobei der Fundamenterdleiter in der eingespannten Lage mittels der Spannplatte gegen den flachen Materialstreifen verspannt ist und auf der dem Fundamenterdleiter entgegengesetzte Seite des flachen Materialstreifens die Konterplatte angeordnet ist, sodass in der eingespannten Lage der Fundamenterdleiter plan an dem Materialstreifen anliegt.

Auch die Anordnung einer weiteren, auf der der Spannplatte abgewandten Seite des Materialstreifens angeordneten Konterplatte erhöht die Biegesteifigkeit des flachen Materialstreifens in dem Bereich, in dem der flache Materialstreifen mit dem Fundamenterdleiter verbunden werden soll.

Zudem kann besonders bevorzugt vorgesehen sein, dass die Spannplatte und / oder die Konterplatte im Querschnitt eine Profilform aufweisen.

Hierdurch wird zusätzlich die Biegesteifigkeit der Spannplatte und gegebenenfalls die Biegesteifigkeit der Konterplatte erhöht, sodass auch diese Teile mit deutlich höheren Spannkräften gegen den bereits verstärkten Bereich des flachen Materialstreifens verspannt werden können. Auch hierdurch ist es ermöglicht, den Fundamenterdleiter mit äußerst hohen Spannkräften gegen den verstärkten Bereich des flachen Materialstreifens zu verspannen, um die ungewünschte Funkenbildung in diesem Bereich zu vermeiden.

Zudem bildet die verstärkte Konterplatte eine weitere Erhöhung der Biegesteifigkeit des bereits verstärkten flachen Materialstreifens.

Auch ist es möglich, die Biegesteifigkeit des flachen Materialstreifens ausschließlich durch Einsatz einer derartigen Konterplatte ausreichend zu erhöhen. Bei einer derartigen Lösung wird auf an sich bekannter Art und Weise der Fundamenterdleiter mittels der Spannplatte gegen den flachen Materialstreifen verspannt. Dadurch, dass an der dem Fundamenterdleiter entgegengesetzten Seite des flachen Materialstreifens eine Konterplatte angeordnet ist, können deutlich höhere Spannkräfte durch die Spannplatte aufgebracht werden, um den Fundamenterdleiter derart an den flachen Materialstreifen anzuspannen, dass dieser plan auf diesem aufliegt beziehungsweise anliegt und die ungewünschte Funkenbildung in diesem Bereich vermieden ist.

Dabei kann besonders bevorzugt vorgesehen sein, dass die Spannplatte und / oder die Konterplatte im Querschnitt U-förmig ausgebildet sind.

Die Verwendung einer U-Form als Mittel zur Erhöhung der Biegesteifigkeit hat sich dabei besonders bewährt und stellt eine gleichzeitig kostengünstig und einfach zu fertigende und eine hohe Lebensdauer aufweisende Lösung zur Erhöhung der Biegesteifigkeit dieser Teile dar.

Weiterhin kann besonders bevorzugt vorgesehen, dass der flache Materialstreifen, die Spannplatte und / oder die Konterplatte aus einem hochfesten Material, insbesondere aus VA, bestehen.

Auch die Verwendung von hochfesten Materialien, insbesondere aus VA ermöglichen das Verspannen der Spannplatte und gegebenenfalls der Konterplatte gegen den Materialstreifen mit besonders hohen Spannkräften ohne dabei zu verbiegen. Auch hierdurch ist es ermöglicht, den Fundamenterdleiter mit besonders hohen Spannkräften zwischen der Spannplatte und dem flachen Materialstreifen zu verspannen, sodass die unerwünschte Funkenbildung durch das Planeaufliegen des Fundamenterdleiters auf dem flachen Materialstreifen vermieden ist.

Um ein besonders schnelles und einfaches Befestigen der Spannplatte und gegebenenfalls der Konterplatte an dem flachen Materialstreifen zu ermöglichen, kann besonders bevorzugt vorgesehen sein, dass die von den Befestigungsmitteln durchgriffenen Lochungen des flachen Materialstreifens, der Spannplatte und gegebenenfalls der Konterplatte durch Langlöcher, im Falle der Spannplatte und gegebenenfalls der Konterplatte durch randoffene Langlöcher, gebildet sind.

Durch die Anordnung derartiger Langlöcher, teilweise randoffener Langlöcher, können die entsprechenden Teile auf schnelle und einfache Art und Weise im Bereich ihrer Lochungen übereinandergelegt werden und durch die Lochungen durchgreifende Schrauben miteinander verschraubt werden. Der Fundamenterdleiter liegt in dieser Lage zwischen zwei in Längsrichtung aufeinanderfolgenden Lochungen, sodass anschließend lediglich die die Lochungen durchgreifenden Schrauben entsprechend angezogen werden müssen, um den Fundamenterdleiter wie gewünscht zu verspannen.

Auch kann besonders bevorzugt vorgesehen sein, dass der flache Materialstreifen mittels isolierter Befestigungsmittel an einer Gebäudewand befestigbar oder befestigt ist.

Eine derartige Anordnung ist an sich bekannt und hat sich bewährt. Hierdurch ist es sichergestellt, dass keinerlei abzuführende Ströme durch die Befestigungsmittel des flachen Materialstreifens in die Gebäudewand eingeleitet werden können.

Schließlich kann besonders bevorzugt vorgesehen sein, dass der flache Materialstreifen einen oder mehrere Verbindungselemente wie Schraubklemmen zur leitenden Verbindung von Schutzleitern aufweist.

Auch die Anordnung derartiger Verbindungselemente wie Schraubklemmen ist an sich bekannt und hat sich bewährt. Hierdurch ist es dem Monteur vor Ort ermöglicht, auf schnelle und einfache Art und Weise die innerhalb des Gebäudes zusammengeführten und gemeinsam abzuleitenden Masseanschlüsse mit dem flachen Materialstreifen zu verbinden.

Ein Ausführungsbeispiel der Erfindung ist in den Figuren dargestellt und im Folgenden näher beschrieben.

Es zeigt:
- Fig. 1: ein erstes Ausführungsbeispiel Der Erfindung in perspektivischer Ansicht;
- Fig. 2: ein weiteres Ausführungsbeispiel der Erfindung in perspektivischer Ansicht;
- Fig. 3: eine Seitenansicht eines Ausführungsbeispiels mit verspanntem Fundamenterdleiter;

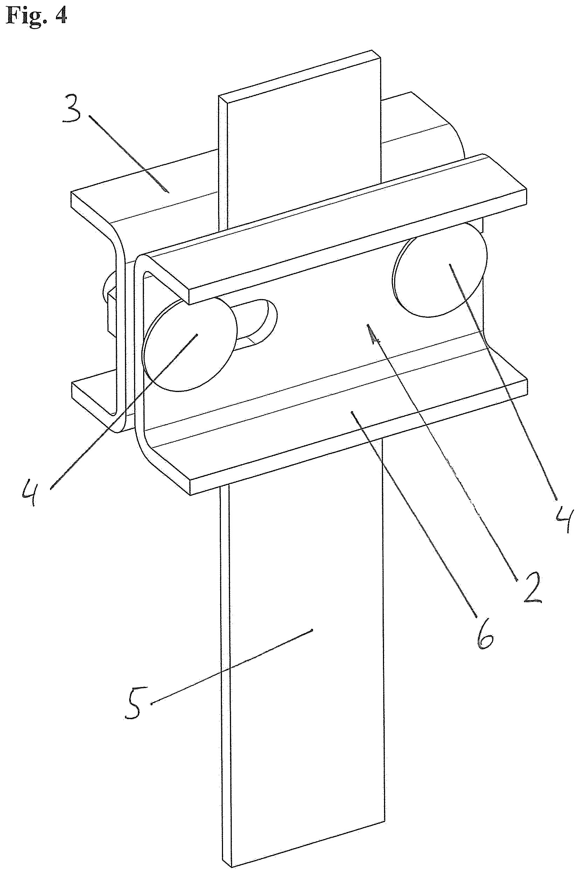

- Fig. 4: ein Ausschnitt eines Ausführungsbeispiels in perspektivischer Ansicht mit Fundamenterdleiter;

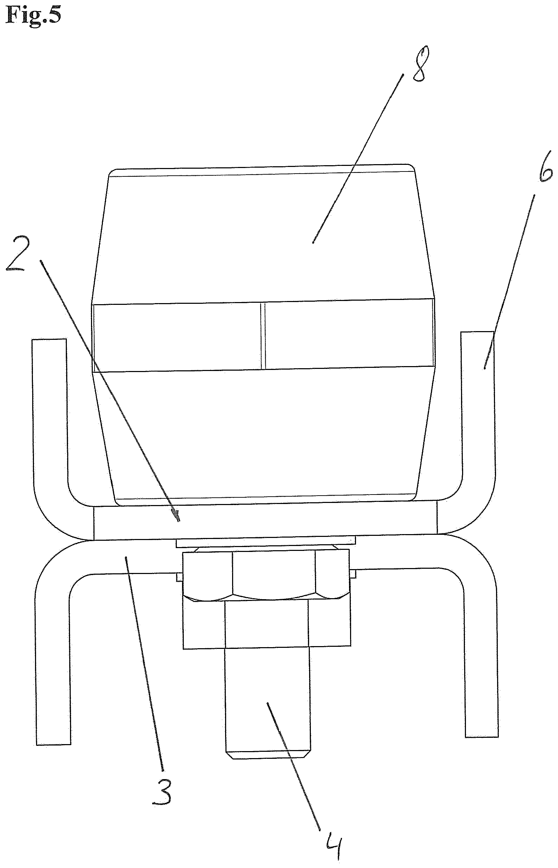

- Fig. 5: eine Frontansicht eines Ausführungsbeispiels.

In den Figuren ist eine Potentialausgleichsschiene 1 gezeigt. Die Potentialausgleichsschiene 1 besteht aus einem flachen Materialstreifen 2 aus Metall, an dem eine Spannplatte 3 aus Metall mittels die Teile durchgreifender Befestigungsmittel 4 befestigt ist.

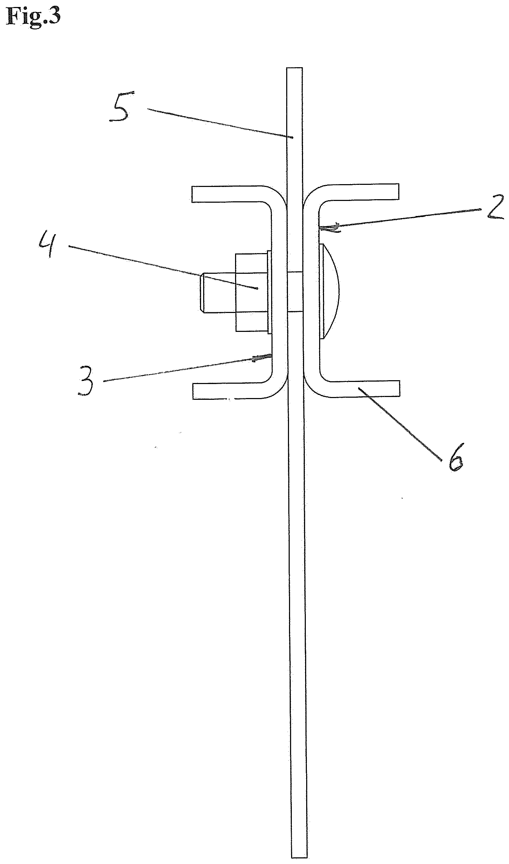

Zwischen dem Materialstreifen 2 und der Spannplatte 3 ist, wie insbesondere in Figur 3 gezeigt, ein quer zum Längsverlauf des Materialstreifens 2 angeordneter flacher Fundamenterdleiter 5 eingespannt.

Erfindungsgemäß ist der Materialstreifen 2 mindestens im von der Spannplatte 3 überdeckten Bereich derart biegesteif ausgebildet, dass er den von den Befestigungsmitteln 4 aufgebrachten Spannkräften ohne Durchbiegung wiedersteht.

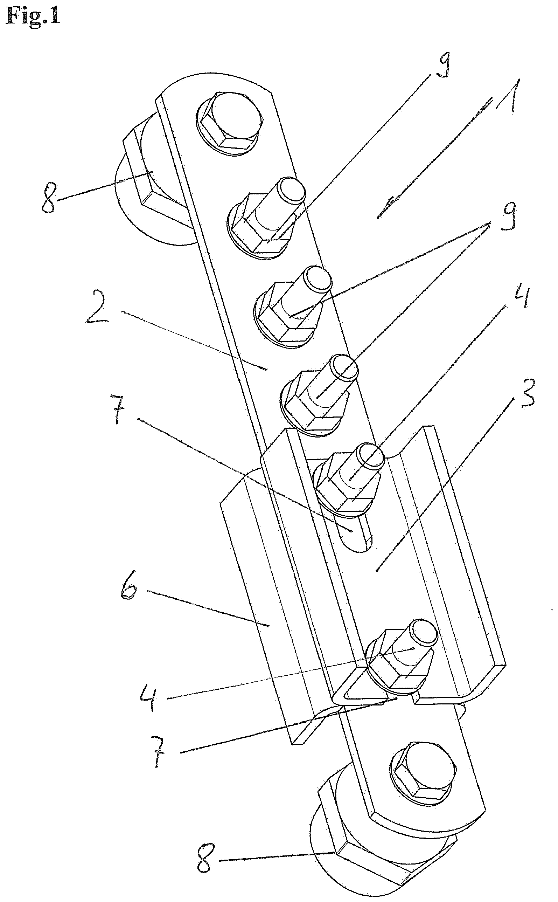

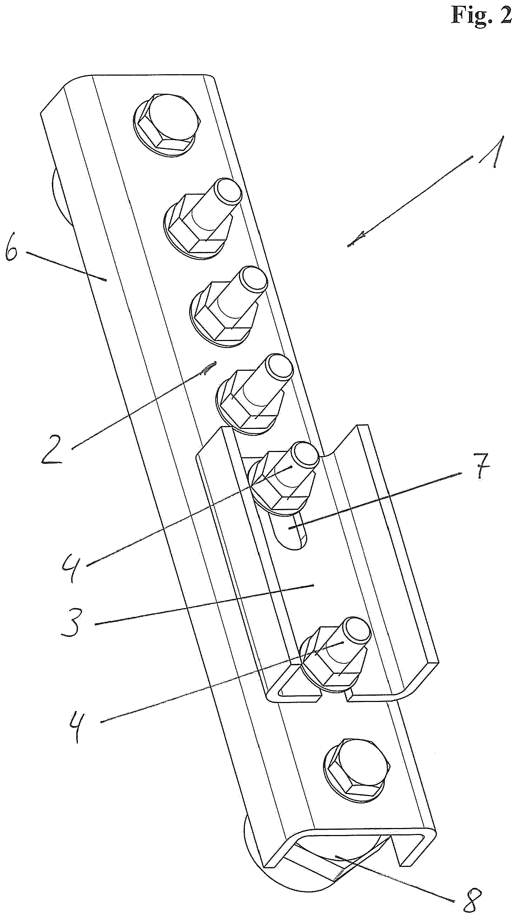

Hierzu ist der flache Materialstreifen 2 zumindest in dem Bereich der von der Spannplatte 3 überdeckt ist, im Querschnitt profilförmig, im Ausführungsbeispiel U-profilförmig ausgebildet. Dabei kann entweder die gesamte Länge des flachen Materialstreifens 2 profilförmig ausgebildet sein (siehe Figur 2) oder nur der Bereich des flachen Materialstreifens 2, der von der Spannplatte 3 überdeckt ist (siehe Ausführungsbeispiel Figur 1) .

Durch die Ausbildung dieses verstärkten Bereiches des flachen Materialstreifens 2 ist es möglich, den Fundamenterdleiter 5 mit besonders hohen Spannkräften gegen den verstärkten Bereich des flachen Materialstreifens 2 zu verspannen. Durch das Verspannen mit besonders hohen Spannkräften liegt der flache Fundamenterdleiter 5 plan an dem flachen Materialstreifen 2 an und es ist eine ungewünschte Funkenbildung in diesem Bereich vermieden, sodass eine derartige Potentialausgleichsschiene 1 auch in explosionsgefährdeten Umgebungen eingesetzt werden kann.

Wie insbesondere aus Figur 3 ersichtlich, liegt der Fundamenterdleiter 5 außenseitig auf der Basis der U-Form 6 (das Bezugszeichen 6 zeigt dabei einen Schenkel der U-Form) des verstärkten Bereichs des flachen Materialstreifens 2 an und ist gegen diese verspannt.

Bei einen in den Figuren nicht gezeigten Ausführungsbeispiel kann auf der der Spannplatte 3 gegenüberliegenden, also dieser abgewandten Seite des Materialstreifens 2 eine Konterplatte angeordnet sein, die ebenfalls von den Befestigungsmitteln 4 durchgriffen ist, die an der der Spannplatte 3 abgewandten Seite des flachen Materialstreifens gegen den flachen Materialstreifen 2 verspannbar ist. Auch hierdurch ist die Biegesteifigkeit insbesondere des flachen Materialstreifens 2 weiter erhöht, sodass die Teile mit besonders hohen Kräften gegeneinander verspannbar sind. Hierdurch ist ein absolut planes Anliegen des Fundamenterdleiters 5 an dem flachen Materialstreifen 2 ermöglicht, sodass eine in diesem Bereich entstehende, ungewünschte Funkenbildung vermieden ist.

In einem in den Figuren nicht gezeigten und nicht vom Bereich der Ansprüche umfasst alternativen Ausführungsbeispiel ist die Materialstärke des flachen Materialstreifens 2 zumindest im Anschlussbereich des Fundamenterdleiters 5 größer als im restlichen Bereich des flachen Materialstreifens 2. Auch durch diese Erhöhung der Materialstärke ist die Biegesteifigkeit des flachen Materialstreifens 2 in diesem Bereich, der den Verbindungsbereich mit dem Fundamenterdleiter 5 bildet, deutlich erhöht, sodass der Fundamenterdleiter 5 mit höheren Spannkräften gegen den flachen Materialstreifen 2 verspannt werden kann, und somit die ungewünschte Funkenbildung vermieden ist.

Zur weiteren Erhöhung der Biegesteifigkeit in dem zu verspannenden Bereich des Fundamenterdleiters 5 gegen den flachen Materialstreifen 2 weist auch die Spannplatte 3 im Querschnitt eine U-Form (bei 6) auf.

Auch die in den Figuren nicht gezeigte Konterplatte kann dabei eine entsprechende Querschnittsform, beispielsweise eine U-Form zur Erhöhung der Biegesteifigkeit aufweisen.

Im Ausführungsbeispiel bestehen der flache Materialstreifen 2, die Spannplatte 3 und die Konterplatte aus einem hochfesten Material aus VA.

Auch hierdurch ist ein Verspannen der Teile gegeneinander mit besonders hohen Spannkräften ermöglicht, da dieses Material den hohen Spannkräften standhält.

Zur einfachen Montage vor Ort sind die von den Befestigungsmitteln 4 durchgriffenen Lochungen des flachen Materialstreifens 2, der Spannplatte 3 und gegebenenfalls der Konterplatte durch Langlöcher 7 gebildet. Zur weiteren Vereinfachung der Montage können die Langlöcher 7 der Spannplatte 3 und gegebenenfalls der Konterplatte durch randoffene Langlöcher 7 gebildet sein.

Hierdurch ist ein schnelles und einfaches Befestigen der Spannplatte 3 an dem flachen Materialstreifen 2 und Verspannen des Fundamenterdleiters 5 zwischen Spannplatte 3 und flachem Materialstreifen 2 ermöglicht.

Der flache Materialstreifen 2 ist in an sich bekannter Art und Weise mittels isolierter Befestigungsmittel 8 auf schnelle und einfache Art und Weise an einer Gebäudewand befestigbar. Zudem weist der flache Materialstreifen 2 mehrere Schraubklemmen 9 als Verbindungselemente zur Verbindung von leitenden Schutzleitern auf. Auch dies ist an sich bekannt und hat sich bewährt.

### Bezugszeichenliste:

- 1: Potentialausgleichsschiene
- 2: Materialstreifen
- 3: Spannplatte
- 4: Befestigungsmittel
- 5: Fundamenterdleiter
- 6: U-Form von 2
- 7: Langlöcher an 3
- 8: isolierte Befestigungsmittel
- 9: Schraubklemmen

## Patentansprüche

1. Potentialausgleichsschiene (1) in Form eines flachen Materialstreifens (2) aus Metall, an dem eine Spannplatte (3) aus Metall mittels die Teile durchgreifender Befestigungsmittel (4) befestigbar oder befestigt ist, wobei zwischen dem Materialstreifen (2) und der Spannplatte (3) ein quer zum Längsverlauf des Materialstreifens (2) anzuordnender flacher Fundamenterdleiter (5) einspannbar oder eingespannt ist, **dadurch gekennzeichnet, dass** der Materialstreifen (2) mindestens im von der Spannplatte (3) überdeckten Bereich derart biegesteif ausgebildet ist, dass er den von den Befestigungsmitteln (4) aufgebrachten Spannkräften ohne Durchbiegung widersteht und der Fundamenterdleiter (5) in der eingespannten Lage über seine gesamte Breite plan an dem flachen Materialstreifen (2) anliegt, wobei der flache Materialstreifen (2) zumindest in dem Bereich der von der Spannplatte (3) überdeckt ist, im Querschnitt eine Profilform aufweist, und wobei der flache Materialstreifen (2) zumindest in dem Bereich der von der Spannplatte (3) überdeckt ist, im Querschnitt U-förmig ausgebildet ist, wobei der Fundamenterdleiter (5) außenseitig auf der Basis der U-Form anliegt und gegen diese verspannt ist.

2. Potentialausgleichsschiene (1) nach Anspruch 1, **dadurch gekennzeichnet, dass** gegenüber der Spannplatte (3) auf der dieser abgewandten Seite des Materialstreifens (2) eine Konterplatte angeordnet ist, die ebenfalls von den Befestigungsmitteln (4) durchgriffen ist, wobei der Fundamenterdleiter (5) in der eingespannten Lage mittels der Spannplatte (3) gegen den flachen Materialstreifen (2) verspannt ist und auf der dem Fundamenterdleiter (5) entgegengesetzten Seite des flachen Materialstreifens (2) die Konterplatte angeordnet ist, sodass in der eingespannten Lage der Fundamenterdleiter (5) plan an dem Materialstreifen (2) anliegt.

3. Potentialausgleichsschiene (1) nach einem der Ansprüche 1 oder 2, **dadurch gekennzeichnet, dass** die Spannplatte (3) und / oder die Konterplatte im Querschnitt eine Profilform aufweisen.

4. Potentialausgleichsschiene (1) nach Anspruch 3, **dadurch gekennzeichnet, dass** die Spannplatte (3) und / oder die Konterplatte im Querschnitt U-förmig ausgebildet sind.

5. Potentialausgleichsschiene (1) nach einem der Ansprüche 1 bis 4, **dadurch gekennzeichnet, dass** der flache Materialstreifen (2), die Spannplatte (3) und / oder die Konterplatte aus einem hochfesten Material, insbesondere aus VA, bestehen.

6. Potentialausgleichsschiene (1) nach einem der Ansprüche 1 bis 5, **dadurch gekennzeichnet, dass** die von den Befestigungsmitteln (4) durchgriffenen Lochungen des flachen Materialstreifens (2), der Spannplatte (3) und gegebenenfalls der Konterplatte durch Langlöcher, im Falle der Spannplatte (3) und gegebenenfalls der Konterplatte durch randoffene Langlöcher (7), gebildet sind.

7. Potentialausgleichsschiene nach einem der Ansprüche 1 bis 6, **dadurch gekennzeichnet, dass** der flache Materialstreifen (2) mittels isolierter Befestigungsmittel (8) an einer Gebäudewand befestigbar oder befestigt ist.

8. Potentialausgleichsschiene nach einem der Ansprüche 1 bis 7, **dadurch gekennzeichnet, dass** der flache Materialstreifen (2) einen oder mehrere Verbindungselemente wie Schraubklemmen (9) zur leitenden Verbindung von Schutzleitern aufweist.

## Claims

1. An equipotential bonding rail (1) in the form of a plane material strip (2) of metal, to which can be attached or is attached a tensioning plate (3) of metal by means of attachment means (4) passing through the parts, between the material strip (2) and the tensioning plate (3) a plane foundation earth electrode (5) to be disposed transversely to the longitudinal extension of the material strip (2) being clampable or being clamped, **characterized by that** the material strip (2), at least in the region covered by the tensioning plate (3), forms a bending-resistant structure such that it withstands the tensioning forces applied by the attachment means (4) without being bent, and the foundation earth electrode (5), in the clamped position, rests over its full width flatly against the plane material strip (2), the plane material strip (2), at least in the region covered by the tensioning plate (3), having a profile-shaped cross-section, and the plane material strip (2), at least in the region covered by the tensioning plate (3), having a U-shaped cross-section, the foundation earth electrode (5) resting outside on the base of the U-shape and being clamped thereonto.

2. The equipotential bonding rail (1) according to claim 1, **characterized by that** opposite to the tensioning plate (3), on the side facing away therefrom, of the material strip (2), a counter plate is arranged that is also passed by the attachment means (4), the foundation earth electrode (5), in the clamped position, being clamped by means of the tensioning plate (3) against the plane material strip (2), and on the side of the plane material strip (2) opposite to the foundation earth electrode (5), the counter plate being arranged, so that in the clamped position, the foundation earth electrode (5) rests flatly against the material strip (2).

3. The equipotential bonding rail (1) according to one of claims 1 or 2, **characterized by that** the tensioning plate (3) and/or the counter plate have a profile-shaped cross-section.

4. The equipotential bonding rail (1) according to claim 3, **characterized by that** the tensioning plate (3) and/or the counter plate have a U-shaped cross-section.

5. The equipotential bonding rail (1) according to one of claims 1 to 4, **characterized by that** the plane material strip (2), the tensioning plate (3) and/or the counter plate are made of a highly resistant material, in particular stainless steel.

6. The equipotential bonding rail (1) according to one of claims 1 to 5, **characterized by that** the holes passed by the attachment means (4) of the plane material strip (2), the tensioning plate (3) and, if applicable, the counter plate are formed by oblong holes, in the case of the tensioning plate (3) and, if applicable, of the counter plate by oblong holes (7) with open rims.

7. The equipotential bonding rail according to one of claims 1 to 6, **characterized by that** the plane material strip (2) can be attached or is attached by means of insulated attachment means (8) to a building wall.

8. The equipotential bonding rail according to one of claims 1 to 7, **characterized by that** the plane material strip (2) comprises one or more connection elements such as screw clamps (9) for a conductive connection of protective conductors.

## Revendications

1. Barre équipotentielle (1) en forme d'une bande de matériau (2) plane en métal, à laquelle peut être fixé ou est fixé un plateau de fixation (3) en métal au moyen de moyens de fixation (4) traversant les pièces, entre la bande de matériau (2) et le plateau de fixation (3) une prise de terre à fond de fouille (5) plane à être disposée transversalement à l'étendue longitudinale de la bande de matériau (2) pouvant être enserrée ou étant enserrée, **caractérisée en ce que** la bande de matériau (2), au moins dans la région recouverte par le plateau de fixation (3), forme une structure rigide en flexion, de façon qu'elle résiste aux efforts de tension appliqués par les moyens de fixation (4) sans être pliée, et la prise de terre à fond de fouille (5), dans la position enserrée, est en appui plan sur sa longueur complète de la bande de matériau (2) plane, la bande de matériau (2) plane, au moins dans la région recouverte par le plateau de fixation (3), ayant une section en coupe en forme de profilé, et la bande de matériau (2) plane, au moins dans la région recouverte par le plateau de fixation (3), ayant une section en coupe en forme d'U, la prise de terre à fond de fouille (5) étant en appui à l'extérieur sur la base de la forme d'U et étant enserrée contre celle-ci.

2. Barre équipotentielle (1) selon la revendication 1, **caractérisée en ce qu'**en vis-à-vis du plateau de fixation (3), sur le côté à l'opposé de celui-ci, de la bande de matériau (2), une contreplaque est prévue, qui est aussi traversée par les moyens de fixation (4), la prise de terre à fond de fouille (5), dans la position enserrée, étant enserrée au moyen du plateau de fixation (3) contre la bande de matériau (2) plane, et au côté de la bande de matériau (2) plane opposé à la prise de terre à fond de fouille (5), la contreplaque étant arrangée, de façon que dans la position enserrée, la prise de terre à fond de fouille (5) soit en appui plan sur la bande de matériau (2).

3. Barre équipotentielle (1) selon une des revendications 1 ou 2, **caractérisée en ce que** le plateau de fixation (3) et/ou la contreplaque ont une section en coupe en forme de profilé.

4. Barre équipotentielle (1) selon la revendication 3, **caractérisée en ce que** le plateau de fixation (3) et/ou la contreplaque ont une section en coupe en forme d'U.

5. Barre équipotentielle (1) selon une des revendications 1 à 4, **caractérisée en ce que** la bande de matériau (2) plane, le plateau de fixation (3) et/ou la contreplaque sont en un matériau de haute résistance, en particulier acier inoxydable.

6. Barre équipotentielle (1) selon une des revendications 1 à 5, **caractérisée en ce que** les trous traversés par les moyens de fixation (4) de la bande de matériau (2) plane, du plateau de fixation (3) et, le cas échéant, de la contreplaque sont réalisés par des trous oblongs, dans cas du plateau de fixation (3) et, le cas échéant, de la contreplaque par des trous oblongs (7) à des bords ouverts.

7. Barre équipotentielle selon une des revendications 1 à 6, **caractérisée en ce que** la bande de matériau (2) plane peut être fixée ou est fixée au moyen de moyens de fixation (8) isolés à une paroi d'un bâtiment.

8. Barre équipotentielle selon une des revendications 1 à 7, **caractérisée en ce que** la bande de matériau (2) plane comprend un ou more plusieurs éléments de liaison comme p.ex. des vis de raccordement (9) pour une liaison conductrice de conducteurs de protection.
